# EUROPÄISCHE PATENTANMELDUNG

(11) **EP 3 594 042 A1**
(43) Veröffentlichungstag der Anmeldung: **15.01.2020**
(21) Anmeldenummer: 19184300.2
(22) Anmeldetag: 04.07.2019
(51) Int. Cl.: B60K 25/08

(54) **ACHSEN-GENERATOR-EINHEIT FÜR EIN FAHRZEUG**

(30) Priorität: 13.07.2018 DE 202018104064 U
(71) Anmelder: Hübner GmbH & Co. KG, 34123 Kassel (DE)
(72) Erfinder: Ebert, Jörg, 50858 Köln (DE)
(74) Vertreter: Patentanwälte Walther Hinz Bayer PartGmbB

(57) **Zusammenfassung**

Gegenstand der Erfindung ist eine Achsen-Generator-Einheit (1) für ein Fahrzeug, insbesondere Nutzfahrzeug oder Anhänger, mit einem Generator (10) zur Erzeugung von elektrischem Strom, wobei der Generator (10) in einem als Teil einer Achsen (12) des Fahrzeugs ausgebildeten Achsrohr (13) aufgenommen ist, wobei eine Kühlhülse (14) zwischen der Außenseite des Generators (10) und der Innenseite des Achsrohres (13) angeordnet ist.

## Beschreibung

Die Erfindung betrifft eine Achsen-Generator-Einheit für ein Fahrzeug, insbesondere Nutzfahrzeug oder Anhänger, mit einem Generator zur Erzeugung von elektrischem Strom, wobei der Generator in einem als Teil einer Achse des Fahrzeugs ausgebildeten Achsrohr aufgenommen ist.

### STAND DER TECHNIK

Moderne Nutzfahrzeuge und Anhänger können Verbraucher aufweisen, die nicht über die Brennkraftmaschine des Fahrzeugs angetrieben oder gespeist werden, und es ist bekannt, nicht angetriebene Achsen von Nutzfahrzeugen oder Anhängern mit Generatoren zu verbinden, die beim Betrieb des Fahrzeugs elektrischen Strom erzeugen und damit die Energie bereitstellen, die von entsprechenden Verbrauchern genutzt werden kann. Derartige Verbraucher sind beispielsweise Kühlaggregate in Anhängern von LKW, oder es können Hebebühnen oder Hubvorrichtungen mit elektrischer Energie betrieben werden, die insbesondere gepuffert mit einer separaten Batterie von einem Generator in der Achse des Nutzfahrzeugs oder des Anhängers gespeist werden. Dabei handelt es sich insbesondere um größere Verbraucher, für die die Leistung des Bordnetzes des Fahrzeugs nicht ausreicht, sodass zusätzliche Energiequellen bereitgestellt werden müssen. Solche Energiequellen können zwar prinzipiell in Form von Generatoren in der Zugmaschine eingebaut werden. Allerdings ist der Bauraum hierfür beschränkt und eine Vergrößerung des zur Verfügung stehenden Bauraums lässt sich bei Karosserieherstellern aufgrund der vergleichsweise geringen Stückzahlen von Fahrzeugen mit entsprechend großen elektrischen Verbrauchern nicht durchsetzen. Ferner ist ohnehin bei Anhängerfahrzeugen die elektrische Leistung gesetzlich limitiert, die von der Zugmaschine auf den Anhänger übertragen werden kann. Aus diesen Gründen besitzen Anhänger mit großen elektrischen Verbrauchern zusätzliche Verbrennungsmotoren zur Erzeugung der benötigten elektrischen Energie, die einerseits wartungsbedürftig sind und andererseits im Betrieb eine zusätzliche und teilweise störende Lärmquelle bilden. Außerdem tragen diese zusätzlichen Verbrennungsmotoren zu einem zusätzlichen Schadstoffausstoß bei. Daher bietet es sich an, Generatoren in Achsen zu integrieren, wobei die Generatoren durch die passive Drehbewegung der beim Betrieb des Fahrzeugs nicht von der Brennkraftmaschine aktiv angetriebenen Achsen angetrieben werden.

Beispielsweise offenbart die DE 10 2013 009 188 A1 eine Achsen-Generator-Einheit für ein Fahrzeug, insbesondere Nutzfahrzeug oder Anhänger, mit einem Generator zur Erzeugung von elektrischem Strom, wobei der Generator in einem als Teil einer Achse des Fahrzeugs ausgebildeten Achsrohr aufgenommen ist. Werden größere Verbraucher mit dem Generator gespeist und liefert der Generator größere elektrische Leistungen beim Betrieb des Nutzfahrzeugs oder des Anhängers, kann eine Kühlung des Generators erforderlich werden, die aus konstruktiven Gründen und insbesondere aus Kostengründen möglichst einfach ausgeführt werden soll.

### OFFENBARUNG DER ERFINDUNG

Aufgabe der Erfindung ist die Weiterbildung einer Achsen-Generator-Einheit mit einem in einem Achsrohr integrierten Generator, der auf vorteilhafte Weise gekühlt werden kann.

Diese Aufgabe wird ausgehend von einer Achsen-Generator-Einheit gemäß dem Oberbegriff des Anspruches 1 in Verbindung mit den kennzeichnenden Merkmalen gelöst. Vorteilhafte Weiterbildungen der Erfindung sind den abhängigen Ansprüchen angegeben.

Die Erfindung schließt die technische Lehre ein, dass eine Kühlhülse zwischen der Außenseite des Generators und der Innenseite des Achsrohres angeordnet ist. Die Kühlhülse bietet dabei die Möglichkeit, einen unmittelbaren Abtransport von im Generator entstehender Wärme an die Außenseite des Achsrohres zu schaffen, sodass vorzugsweise über Konvektion der Außenseite des Achsrohres die Wärme abgeführt werden kann. Durch die Kühlhülse erfolgt dabei eine Entwärmung des Generators mittels eines Übergangs der Wärme auf das Achsrohr und damit auf die Außenseite des Achsrohres und folglich der Achse, die im Betrieb des Nutzfahrzeugs oder des Anhängers mit einem Luftstrom umströmt wird.

Mit besonderem Vorteil ist in dem Achsrohr ein Getriebe aufgenommen, das an den Generator angebunden ist, wobei die Kühlhülse zwischen den Außenseiten des Generators und des Getriebes und der Innenseite des Achsrohres angeordnet ist. Wie auch beim Generator kann folglich Wärme, die im Getriebe entsteht, aus diesem auf das Achsrohr und dessen Oberfläche übergeleitet werden, indem die Kühlhülse sich über die längliche Erstreckung sowohl des Generators als auch des Getriebes erstreckt.

Um einen möglichst guten Wärmeübergang zwischen der Kühlhülse und dem Generator und/oder des Getriebes zu erreichen, ist vorgesehen, die Kühlhülse auf die Außenseite des Generators und/oder des Getriebes aufzupressen. Dadurch entsteht ein besonders guter Festkörperkontakt, und die im Generator und Getriebe entstehende Wärme kann ohne eine Wärmesenke auf die Kühlhülse übertragen werden.

Mit weiterem Vorteil kann die Kühlhülse in das Achsrohr eingepresst sein, sodass auch ein guter Wärmeübergang von der Kühlhülse an das Achsrohr gewährleistet ist.

Eine gute Wärmeübertragung kann insbesondere dann erreicht werden, wenn die Kühlhülse aus einem Werkstoff hergestellt ist, der eine hohe Leitfähigkeit aufweist. Insbesondere sollte diese größer als die Leitfähigkeit eines Stahlwerkstoffes sein. Vorzugsweise wird eine Kühlhülse eingesetzt, die aus Aluminium ausgebildet ist, welches sich durch eine gute Wärmeleitfähigkeit auszeichnet. Gleichzeitig lässt sich Aluminium einfach verarbeiten und erhöht nur unwesentlich das Gewicht der Achsen-Generator-Einheit. Alternativ kann die Kühlhülse aus einem anderen Material hergestellt sein, z. B. Kupfer oder Messing.

Ein weiterer Vorteil wird erreicht, wenn die Kühlhülse aus einem zu einer Hülse gebogenen Flächenkörper hergestellt ist. Dadurch können die Kosten zur Herstellung der Kühlhülse weiter reduziert werden, wobei die Kühlhülse auch einen Längsschlitz aufweisen kann, sodass sich die auf dem Umfang gegenüberstehenden Längskanten des Flächenkörpers, der zu einer Hülse gebogen wurde, nicht gänzlich berühren. Dadurch können Maßtoleranzen ausgeglichen werden. Insbesondere kann die Kühlhülse gemäß dieser Ausführungsform auffedern oder zusammengedrückt werden, wenn diese auf den Generator und/oder auf das Getriebe aufgebracht und/oder in das Achsrohr eingeführt wird.

Weiterhin kann die Kühlhülse auf einer Außenseite Ausnehmungen aufweisen, die in Anordnung der Kühlhülse im Achsrohr mit der Innenwand des Achsrohres im Querschnitt geschlossene Kühlkanäle ausbilden. Durch die Kühlkanäle kann ein Kühlmedium hindurchgeführt werden, beispielsweise eine Flüssigkeit, insbesondere Kühlwasser oder Kühlöl.

Im Achsrohr ist gemäß einer weiteren Ausführungsform wenigstens eine das Achsrohr radial durchwandernde Anschlussöffnung ausgebildet, durch die ein Kühlmittelanschluss zur fluidischen Verbindung mit den Kühlkanälen hergestellt ist. Über die Kühlmittelanschlüsse kann das Kühlmedium beispielsweise in die Kühlkanäle eingeführt und aus diesen wieder herausgeführt werden. Die Kühlmittelanschlüsse befinden sich dabei in Bezug auf die Einbaulage der Achsen-Generator-Einheit auf der Oberseite des Achsrohres.

Ein weiterer Vorteil wird erreicht, wenn das Achsrohr auf der Außenseite Kühlrippen aufweist, über die Wärme, die im Betrieb des Generators und/oder des Getriebes entsteht, abführbar ist. Alternativ oder zusätzlich kann vorgesehen sein, auf der Außenseite des Achsrohres wenigstens ein Kühlrohr anzuordnen. Das Kühlrohr kann mäanderförmig die Außenseite des Achsrohres umschließen und/oder das Kühlrohr ist zwischen den Kühlrippen verlaufend ausgebildet.

Insbesondere besteht die Möglichkeit, die Kühlkanäle innerhalb des Achsrohres mit dem Kühlrohr auf der Außenseite des Achsrohres fluidisch zu verbinden.

### BEVORZUGTES AUSFÜHRUNGSBEISPIEL DER ERFINDUNG

Weitere die Erfindung verbessernde Maßnahmen werden nachstehend gemeinsam mit der Beschreibung eines bevorzugten Ausführungsbeispiels der Erfindung anhand der Figuren näher dargestellt.

Die Figuren zeigen in
- Fig. 1: eine Querschnittsansicht einer Achsen-Generator-Einheit für ein Fahrzeug mit der Anordnung einer erfindungsgemäßen Kühlhülse,
- Fig. 2: eine vergrößerte Ansicht der Anordnung der Kühlhülse zwischen einem Generator und einem Getriebe sowie der Innenseite eines Achsrohres gemäß der Achsen-Generator-Einheit aus Fig. 1,
- Fig.3: eine weitere Schnittansicht eines Details der Achsen-Generator-Einheit mit der Anordnung der Kühlhülse,
- Fig. 4: eine perspektivische Ansicht eines Achsrohres in Anordnung an ein Rad eines Nutzfahrzeugs oder eines Anhängers, das an einer Radaufhängung aufgebracht ist, wobei die Radaufhängung mit dem Achsrohr in Verbindung steht, und
- Fig. 5: eine perspektivische Ansicht eines Ausführungsbeispiels einer Kühlhülse zur erfindungsgemäßen Anordnung zwischen der Außenseite des Generators bzw. des Getriebes und der Innenseite des Achsrohres.

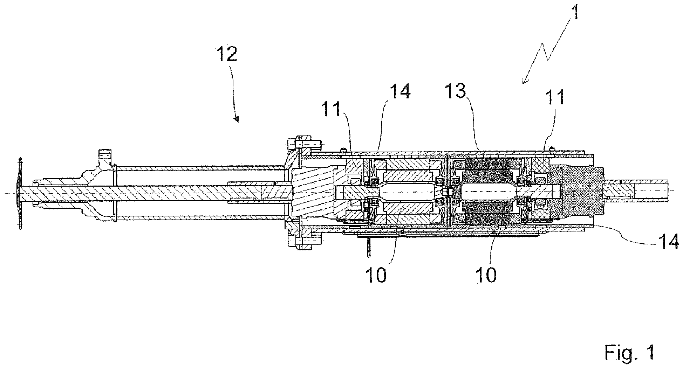

Fig. 1 stellt eine Querschnittsansicht eines Ausführungsbeispiels einer Achsen-Generator-Einheit 1 für ein Fahrzeug dar. Die Achsen-Generator-Einheit 1 umfasst wenigstens den Teil einer Achse 12, die als Strukturbestandteil ein Achsrohr 13 umfasst. Die Achse 12 kann beispielsweise einem Nutzfahrzeug oder einem Anhänger zugehörig sein. Die Achse 12 weist üblicherweise keine Antriebsverbindung auf, die die Achse 12 beispielsweise mit der Brennkraftmaschine eines Fahrzeugs verbindet. Folglich ist die Achse 12 in der Regel eine passive Achse eines Nutzfahrzeugs oder eines Anhängers, die wiederum dazu genutzt wird, Generatoren 10 anzutreiben, in dem auf nicht näher gezeigte Weise die Generatoren 10 insbesondere über Getriebe 11 mit jeweils einem im Betrieb mitdrehenden Rad an der Achse 12 verbunden ist. Die Getriebe 11 sitzen konzentrisch vor den Generatoren 10. Bei dem in Fig. 1 gezeigten Ausführungsbeispiel sind sowohl die Generatoren 10 als auch die Getriebe 11 in dem Achsrohr 13 der Achse 12 integriert.

Die Darstellung zeigt eine symmetrische Anordnung von zwei Generatoren 10 und zwei den jeweiligen Generatoren 10 zugeordneten Getrieben 11. Dabei ist jeder Generator 10 mit der Achse 12 wirkverbunden. Damit können mit dem Fahrzeug auch Kurvenfahrten ausgeführt werden, die zu unterschiedlichen Drehgeschwindigkeiten der Räder und damit auch unterschiedlichen Antriebsgeschwindigkeiten der Generatoren 10 führen, ohne dass für einen Ausgleich der Drehgeschwindigkeiten ein entsprechendes Ausgleichsmittel, insbesondere Getriebe oder Kupplung, vorgesehen werden muss.

Zwischen den Außenseiten der Generatoren 10 sowie der Getriebe 11 und der Innenseite der Achse 12 befindet sich eine Kühlhülse 14, die in das Achsrohr 13 eingepresst ist. Zugleich ist die Kühlhülse 14 auf die Außenseite der Generatoren 10 und der Getriebe 11 aufgepresst. Der Pressverband kann ein Längspressverband oder ein Querpressverband sein und bewirkt einen unmittelbaren Festkörperkontakt zu den Generatoren 10 und zu den Getrieben 11 auf der Innenseite und zum Achsrohr 13 auf der Außenseite. So kann eine besonders gute Wärmeübertragung von den Generatoren 10 und den Getrieben 11 auf die Kühlhülse 14 und von dort auf das Achsrohr 13 erreicht werden.

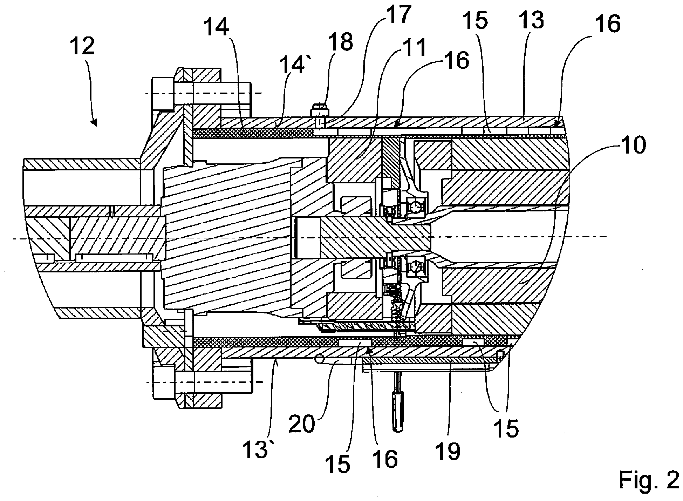

Fig. 2 zeigt eine Detailansicht der Achse 12 mit einem Generator 10, der eine Außenseite aufweist, mit der dieser in die Kühlhülse 14 eingepresst ist. Ferner ist das Getriebe 11 in Wirkverbindung mit dem Generator 10 dargestellt, und die Außenseite des Getriebes 11 ist ebenfalls in die Kühlhülse 14 eingepresst.

Die Außenseite 14' der Kühlhülse 14 weist Ausnehmungen 15 auf, und in gezeigter Weise befindet sich die Kühlhülse 14 im Achsrohr 13, sodass die Ausnehmungen 15 in Zusammenspiel mit dem Achsrohr 13 Kühlkanäle 16 mit geschlossenem Querschnitt bilden. Auf der Außenseite 13' des Achsrohres 13 sind Kühlrippen 19 angeordnet, und zwischen den Kühlrippen 19 sind Kühlrohre 20 verlegt, um eine besonders gute Entwärmung des Generators 10 und des Getriebes 11 über die Kühlhülse 14 und damit über die Außenseite 13' des Achsrohres 13 zu schaffen.

Auf der Oberseite der Anordnung befindet sich im Achsrohr 13 eine Anschlussöffnung 17, die mit einem Kühlmittelanschluss 18 verbunden ist. Der Kühlmittelanschluss 18 steht in fluidischer Verbindung mit den Kühlkanälen 16, sodass diese beispielsweise mit Kühlwasser oder Kühlöl durchströmt werden können.

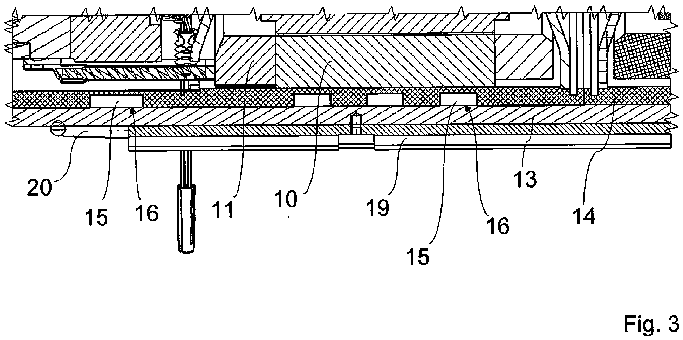

Fig. 3 zeigt eine Querschnittsansicht durch einen unteren Teilbereich mit der Darstellung des Generators 10, des Getriebes 11 sowie des Achsrohres 13. Die Anordnung der Kühlhülse 14 ist dabei verdeutlicht dargestellt und diese steht in direktem Körperkontakt mit der Außenseite des Generators 10 und des Getriebes 11. Weiterhin sind die Ausnehmungen 15 in der Außenumfangsfläche der Kühlhülse 14 dargestellt, durch die die Kühlkanäle 16 gebildet werden. Außenseitig auf dem Achsrohr 13 befinden sich die Kühlrippen 19 und zwischen den Kühlrippen 19 verlaufende Kühlrohre 20.

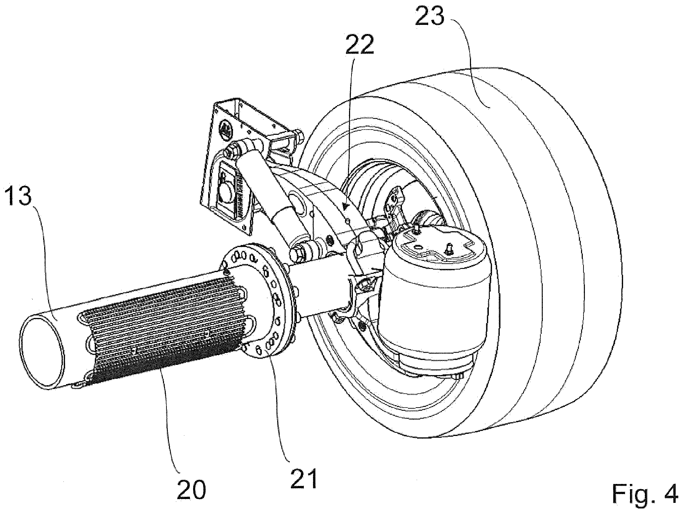

Fig. 4 zeigt eine perspektivische Ansicht des Achsrohres 13, das über einen Flansch 21 mit einer Achsaufhängung 22 verbunden ist. Endseitig auf der Achsaufhängung 22 befindet sich ein Rad 23. Auf der Außenseite des Achsrohres 13 sind Kühlrohre 20 ausgebildet, um eine besonders vorteilhafte Entwärmung des Achsrohres 13 zu schaffen, wenn Wärme aus dem inneren Bereich des Achsrohres 13 insbesondere durch Konvektion abgeführt werden soll.

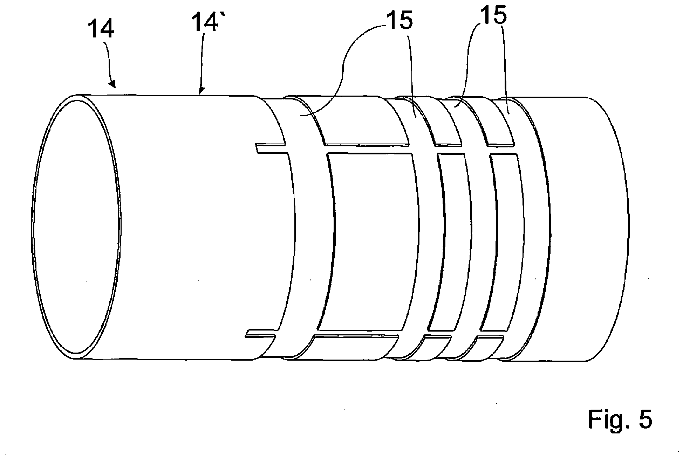

Schließlich zeigt Fig. 5 eine perspektivische Ansicht eines Ausführungsbeispiels einer erfindungsgemäßen Kühlhülse 14. Auf der Außenseite 14' der Kühlhülse 14 sind mehrere Ausnehmungen 15 ausgebildet, die beispielsweise durch Einpressungen oder Einfräsungen erzeugt werden. Die Ausnehmungen 15 verlaufen beispielhaft sowohl in Umfangsrichtung als auch in Längsrichtung der Kühlhülse 14.

Die Erfindung beschränkt sich ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehende Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Achsen-Generator-Einheit

- 10: Generator
- 11: Getriebe
- 12: Achsen
- 13: Achsrohr
- 13': Außenseite
- 14: Kühlhülse
- 14': Außenseite
- 15: Ausnehmung
- 16: Kühlkanal
- 17: Anschlussöffnung
- 18: Kühlmittelanschluss
- 19: Kühlrippe
- 20: Kühlrohr
- 21: Flansch
- 22: Achsaufhängung
- 23: Rad

## Patentansprüche

1. Achsen-Generator-Einheit (1) für ein Fahrzeug, insbesondere Nutzfahrzeug oder Anhänger, mit einem Generator (10) zur Erzeugung von elektrischem Strom, wobei der Generator (10) in einem als Teil einer Achsen (12) des Fahrzeugs ausgebildeten Achsrohr (13) aufgenommen ist,
**dadurch gekennzeichnet,**
**dass** eine Kühlhülse (14) zwischen der Außenseite des Generators (10) und der Innenseite des Achsrohres (13) angeordnet ist.

2. Achsen-Generator-Einheit (1) nach Anspruch 1,
**dadurch gekennzeichnet,**
**dass** in dem Achsrohr (13) ein Getriebe (11) aufgenommen ist, das an den Generator (10) angebunden ist, wobei die Kühlhülse (14) zwischen den Außenseiten des Generators (10) und des Getriebes (11) und der Innenseite des Achsrohres (13) angeordnet ist.

3. Achsen-Generator-Einheit (1) nach Anspruch 1 oder 2,
**dadurch gekennzeichnet,**
**dass** die Kühlhülse (14) auf der Außenseite des Generators (10) und/oder des Getriebes (11) aufgepresst ist.

4. Achsen-Generator-Einheit (1) nach einem der vorgenannten Ansprüche,
**dadurch gekennzeichnet,**
**dass** die Kühlhülse (14) in das Achsrohr (13) eingepresst ist.

5. Achsen-Generator-Einheit (1) nach einem der vorgenannten Ansprüche,
**dadurch gekennzeichnet,**
**dass** die Kühlhülse (14) aus Aluminium ausgebildet ist und/oder dass die Kühlhülse (14) aus einem zu einer Hülse gebogenen Flächenkörper hergestellt ist.

6. Achsen-Generator-Einheit (1) nach einem der vorgenannten Ansprüche,
**dadurch gekennzeichnet,**
**dass** die Kühlhülse (14) auf einer Außenseite (14') Ausnehmungen (15) aufweist, die in Anordnung der Kühlhülse (14) im Achsrohr (13) mit der Innenwand des Achsrohres (13) im Querschnitt geschlossene Kühlkanäle (16) ausbilden.

7. Achsen-Generator-Einheit (1) nach Anspruch 6,
**dadurch gekennzeichnet,**
**dass** im Achsrohr (13) wenigstens eine das Achsrohr (13) radial durchwandernde Anschlussöffnung (17) ausgebildet ist, durch die ein Kühlmittelanschluss (18) zur fluidischen Verbindung mit den Kühlkanälen (16) hergestellt ist.

8. Achsen-Generator-Einheit (1) nach einem der vorgenannten Ansprüche,
**dadurch gekennzeichnet,**
**dass** das Achsrohr (13) auf der Außenseite (13') Kühlrippen (19) aufweist, über die Wärme, die im Betrieb des Generators (10) und des Getriebes (11) entsteht, abführbar ist.

9. Achsen-Generator-Einheit (1) nach einem der vorgenannten Ansprüche,
**dadurch gekennzeichnet,**
**dass** auf der Außenseite (13') des Achsrohres (13) wenigstens ein Kühlrohr (20) angeordnet ist.

10. Achsen-Generator-Einheit (1) nach Anspruch 9,
**dadurch gekennzeichnet,**
**dass** das Kühlrohr (20) zwischen den Kühlrippen (19) verlaufend ausgebildet ist.

11. Achsen-Generator-Einheit (1) nach Anspruch 9 oder 10,
**dadurch gekennzeichnet,**
**dass** die Kühlkanäle (16) innerhalb des Achsrohres (13) mit dem Kühlrohr (20) auf der Außenseite (13') des Achsrohres (13) fluidisch verbunden sind.
